(19) Europäisches Patentamt
European Patent Office
Office européen des brevets

(11) **EP 1 698 137 B1**

(12) **EUROPEAN PATENT SPECIFICATION**

(45) Date of publication and mention
of the grant of the patent:
**08.10.2008 Bulletin 2008/41**

(51) Int Cl.:
**H04L 29/06** (2006.01)    **H04Q 7/38** (2006.01)
**H04L 12/28** (2006.01)

(21) Application number: **04749106.3**

(22) Date of filing: **30.06.2004**

(86) International application number:
**PCT/SE2004/001068**

(87) International publication number:
**WO 2005/060209 (30.06.2005 Gazette 2005/26)**

(54) **METHOD, SYSTEM AND A MOBILE COMMUNICATION STATION ADAPTED FOR SELECTION OF AN ACCESS NETWORK**

ZUR AUSWAHL EINES ZUGANGSNETZWERKS AUSGELEGTES VERFAHREN, SYSTEM UND MOBILKOMMUNIKATIONSSTATION

METHODE, SYSTEME ET STATION MOBILE DE COMMUNICATION PERMETTANT DE SELECTIONNER UN RESEAU D'ACCES

(84) Designated Contracting States:
**AT BE BG CH CY CZ DE DK EE ES FI FR GB GR HU IE IT LI LU MC NL PL PT RO SE SI SK TR**

(30) Priority: **17.12.2003 PCT/SE03/01965**

(43) Date of publication of application:
**06.09.2006 Bulletin 2006/36**

(73) Proprietor: **TELEFONAKTIEBOLAGET LM ERICSSON (publ)**
**164 83 Stockholm (SE)**

(72) Inventors:
• **SIMONSSON, Arne**
**S-954 33 Gammelstad (SE)**
• **FURUSKÄR, Anders**
**113 44 Stockholm (SE)**
• **PETTERSSON, Jonas**
**S-973 43 Lulea (SE)**
• **SVENSSON, Björn**
**S-977 52 Lulea (SE)**

(74) Representative: **Stenborg, Anders Vilhelm et al**
**Aros Patent AB,**
**P.O. Box 1544**
**751 45 Uppsala (SE)**

(56) References cited:
**WO-A1-01/63946**        **US-A1- 2003 026 211**
**US-A1- 2003 043 773**

**Description**

TECHNICAL FIELD

The present invention relates to multi-radio access systems in general, specifically to a method and an arrangement for access selection in such systems.

BACKGROUND

At present, there is a wide variety of wireless and wire bound networks based on different radio access technologies (RAT) and standards. Each RAT has and will have its strengths and weaknesses with respect to capacity, cost, available data rates, and support for end user mobility. Consequently, no single RAT will be able to fully support all service and user requirements. Therefore, it is, and will be, necessary for users and their terminals to be able to utilize multiple accesses depending on the present requirements or requested service. Several multi-access scenarios will exist in the near future, for example comprising both Universal Mobile Telecommunications Systems (UMTS) and Wireless Local Area Networks (WLAN).

In prior art, it has been observed that the radio access is selected based on the radio quality, service type and load in [1]. Access point (cell) selection based on radio quality (handover) and load (load sharing) are established methods in cellular networks.

In the near future, several radio resource management (RRM) distribution scenarios will be possible [2], for example; "terminal controlled without network assistance". Probably also multi-operator subscription will become possible, at least for WLAN. Uncoordinated WLAN accesses already exist.

In all the above examples, a choice of radio access technology, radio network and/or access point has to be performed.

SUMMARY

A general object of the present invention is to enable an improved access selection mechanism in a multi-access system.

Another object is to enable a mechanism for access selection based on both radio quality and load or utilization for each access.

Yet another object is to provide a mechanism for access selection based on an estimated user perceived quality, estimated from load and radio quality.

Further objects of the present invention are

- to enable selecting an access giving the highest bitrate in a multi-access selection
- to enable selecting a network giving the highest bitrate, in a multi-operator selection
- to enable selecting an access point giving the highest bitrate, in an uncoordinated WLAN access point network
- to enable measuring data quality without accessing a network, in a measurement tool (TEMS),to enable improved handover.

These and other objects are achieved in accordance with the attached claims.

Basically, the radio access usage or load or utilization is measured by the terminal and used as a basis, typically in combination with other radio measurements, to estimate a user perceived quality measure such as the packet data bitrate of an access point or node.

Briefly, the present invention enables a user perceived data quality estimate prior to access, which takes load or utilization into account, enabling a terminal based best user quality access selection in a multi-access multi-operator environment

Advantages of the invention comprise:

- Enables estimation of data quality prior to access.
- Takes into account cell/AP load
- Enables best user quality multi-access selection without system coordination.
- Enables best user quality multi-operator selection without operator coordination
- Enables load sharing access selection based in terminal
- No impact on infrastructure
- Improved handover.

BRIEF DESCRIPTION OF THE DRAWINGS

The invention, together with further objects and advantages thereof, may best be understood by making reference to the following description taken together with the accompanying drawings, in which:

Fig. 1 illustrates a general multi-access system, in which the invention can be utilized,
Fig. 2 is a schematic flow diagram of an embodiment according to the invention,
Fig. 3 illustrates the effect of an embodiment according to the invention,
Fig. 4 illustrates the effect of another embodiment according to the invention,
Fig. 5 illustrates an embodiment according to the invention,
Fig. 6 illustrates an example according to an embodiment of the invention,
Fig.7 illustrates another example according to an embodiment of the invention,
Fig. 8 illustrates an embodiment of an arrangement according to the invention.

DETAILED DESCRIPTION

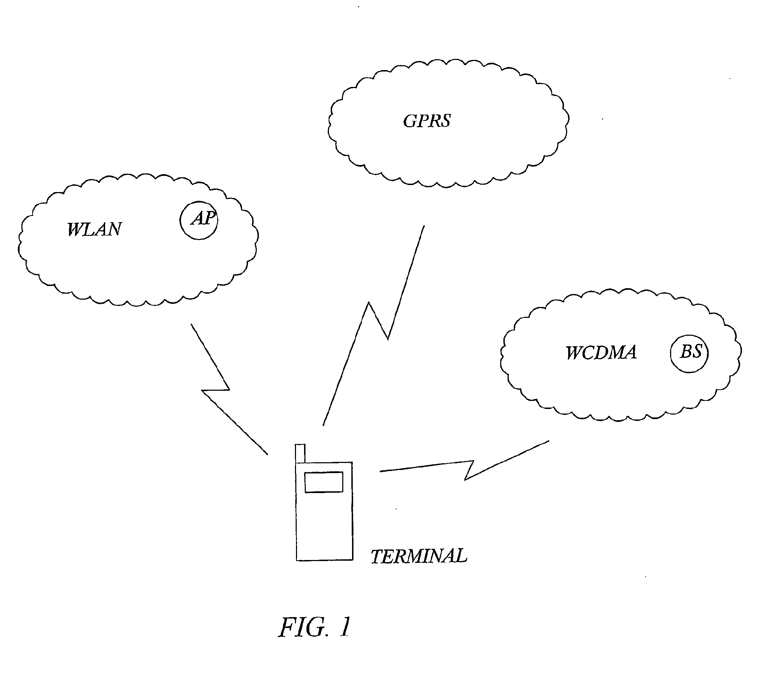

In Figure 1, a schematic illustration of a multi-radio access scenario is shown. Accordingly, the scenario comprises a mobile communication terminal that is able to communicate with at least one of a plurality of accesses or access networks. At some point in time, the terminal needs to be able to select at least one of the plurality of accesses.

The load or utilization of an access network has a large impact on the packet data rate [3]. The existing load sharing mechanisms, both cell selection and radio access selection [1], are network based. In a less coordinated scenario, such solutions are not possible or at least very complicated. Also, it is of little interest from the operator to support load information to the terminal or user.

The user is also more interested in quality i.e. user perceived quality $Q_u$, than overall capacity of the network or system, while the operator in some cases can have contradictory interests.

Throughout the description, the term load is interchangeable with the term utilization or utilization factor, which represents the utilization of at least one access point/base station in an access network. It does not represent a total load in a whole access network.

According to a general embodiment, the present invention basically comprises estimating user perceived data quality $Q_u$ prior to access, which takes load or utilization into account, thereby enabling a terminal based best user quality access selection in a multi-access multi-operator environment.

According to another general embodiment, the invention comprises determining the radio quality for a plurality of available accesses, determining a load or utilization factor for each of the accesses, estimating a user perceived quality based on the determined quality and load, and finally selecting at least one access which gives the best user perceived quality, thereby providing an improved access selection.

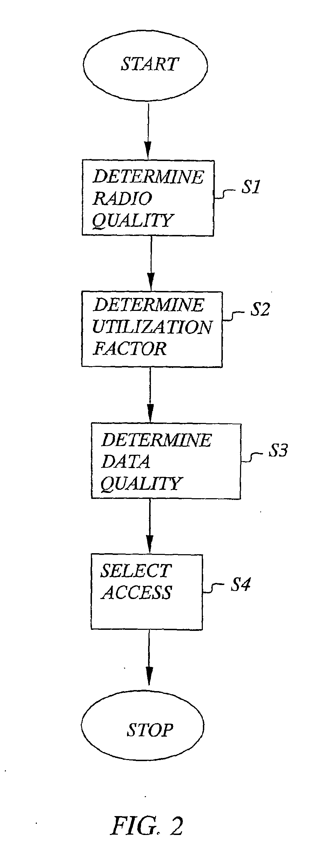

One embodiment of a method, according to the invention, will be described with reference to Fig. 2, which illustrates a schematic flow diagram of an embodiment of a method for improved access selection.

Initially, in step S1, the radio quality $q$ for one or more available accesses is determined. These accesses can comprise access points or base stations or the like within a common network such as WLAN, or different access networks utilizing the same or different RAT, or different access networks belonging to one or different operators, or any combination thereof.

According to a specific embodiment, the determining step S1 comprises the further intermediate step of estimating a radio link bitrate $\mu$ for each access, based on the determined radio quality $q$, according to:

$$\mu = g(q) \qquad \text{Eq.1}$$

where $\mu$ is the radio link bitrate, and $g$ is an access specific function. Accordingly, $\mu$ can be determined as a function of any one of pilot signal strength, beacon signal strength, C/I, or Eb/N0, or other quality parameter such as bit/block/packet-error rate.

The terminal can estimate $\mu$ prior an access as the expected coding and modulation rate. The value of $\mu$ can be specific for each terminal, or optionally constant or the same for each terminal and depend on the signal strength from the various accesses.

In the subsequent step S2, the utilization factor $\rho$ or load for at least one node in at least one available access network is determined. The node can comprise any one of an access point, or base station, or the like.

For For Time Division Multiple Access (TDMA) systems e.g. GSM/GPRS/EDGE, the load or utilization factor

ρ for an access point/base station or access network can be measured as the fraction of activation, according to [5].

Also, according to the invention, the server utilization factor ρ or load can be measured by the terminal as the fraction of activation on the carrier frequency (mainly for WLAN, but also for downlink Wideband Code Division Multiple Access (WCDMA) and CDMA2000). The utilization factor can also be explicitly signaled from the access point.

For WCDMA and CDMA2000 it can be measured as the load factor, see [4], according to:

$$\hat{\rho} = 1 - \frac{P_{CCH}}{P_{tot}} \qquad \text{Eq.2}$$

The common power $P_{CCH}$ can be estimated out from the received pilot power and the total power $P_{tot}$ out from the received wideband signal strength:

$$\hat{\rho} = 1 - \frac{F_{cch} \cdot SS_{pilot}}{2SS_{tot}} \qquad \text{Eq.3}$$

where $F_{CCH}$ is a factor that compensates for the other common channels such as the broadcast channel. This can result in an overestimation of the load for the multiple cell case, since $SS_{tot}$ will include signals transmitted from several cells in the area. This error will be significant only in handover (HO) areas, and will have impact on the quality of user perceived data quality determination, but it can still be used for access selection.

Further, in step S3, the user perceived data quality $Q_u$ for each access or access network is determined, based on the radio quality as represented by $\mu$, and the utilization factor ρ or load for at least one node in at least one available access network.

According to one embodiment, the user perceived data quality $Q_u$ can be represented by an estimation of the Circuit Switched Equivalent bitrate (CSE-bitrate). CSE is defined as "the number of information bits delivered divided by the time when there were bits to deliver".

According to another embodiment, the user perceived data quality $Q_u$ can be represented by an active session throughput, as defined in UMTS30.03 [6].

There is a clear correlation between the user perceived data quality and carrier frequency load. According to an embodiment of the present invention, the user perceived data quality $Q_u$ can be estimated according to:

$$Q_u = \mu \cdot (1 - \rho) \qquad \text{Eq.4}$$

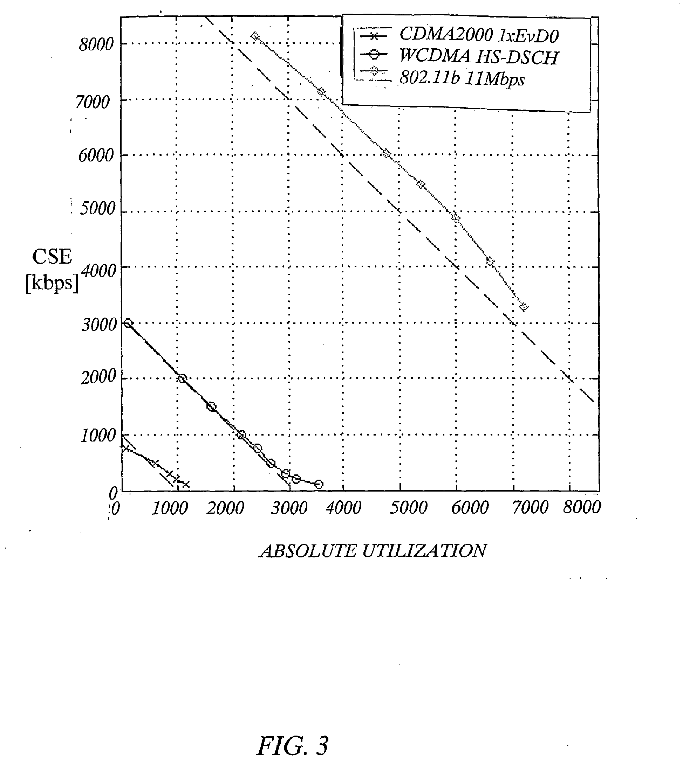

where $\mu$ is the radio link bitrate [kbps], ρ is the utilization factor ($0 < \rho < 1$). In Fig. 3, where the user perceived data quality is represented by the CSE-bitrate; the absolute utilization or ρ*system capacity* is the x-axis, *E[CSE]* is the y-axis and $\mu$ is the intersection of the y-axis of the indicated dashed line.

It is also possible to use the same expression/expressions to estimate a data throughput, not as accurately as for CSE but enough to give a rough estimate of the parameter.

According to a more generalized embodiment, the user perceived data quality $Q_u$ can be determined according to:

$$Q_u = \mu \cdot f(\rho) \qquad \text{Eq.5}$$

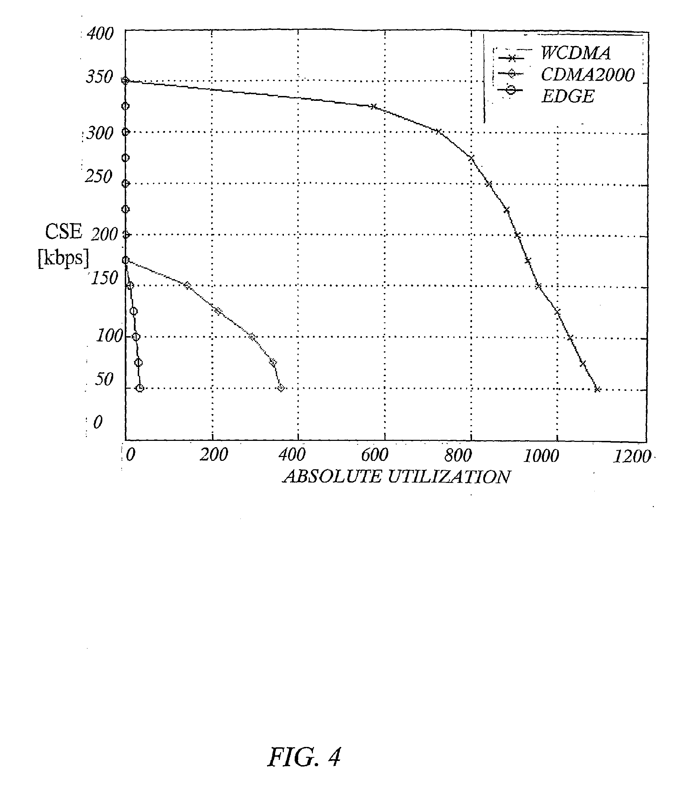

where $\mu$ is the radio link bitrate and *f* is a known access specific function. One example of an access which could be estimated by such an expression is shown in Fig.4, where the user perceived data quality $Q_u$ is represented by the Circuit Switched Equivalent bitrate (CSE).

Optionally, the CSE-bitrate can be determined based on a comparison of a maximum bearer rate and one of the above expressions, whereby the best estimate is the lower of the two values.

Finally, in step S4, the access with the best user perceived data quality $Q_u$ is selected by the terminal. The selection enables any one of the following:

- best user quality multi-access selection without system coordination.
- best user quality multi-operator selection without operator coordination
- load sharing access selection based in terminal,
- improved handover

In addition to the above described relations, the coverage could also be taken into account. With knowledge of the power limits for the radio links and path loss to the server the maximum bit rate can be calculated, e.g. in WCDMA if there is coverage for a 384 kbps bearer.

It is also possible to use some other parameter to represent the user perceived quality of an access, such a parameter is the active session throughput. This can be estimated in the same manner as above, but with a somewhat lower accuracy. It is however possible to use as a rough estimate, which at least improves the chance for the terminal to receive a better quality.

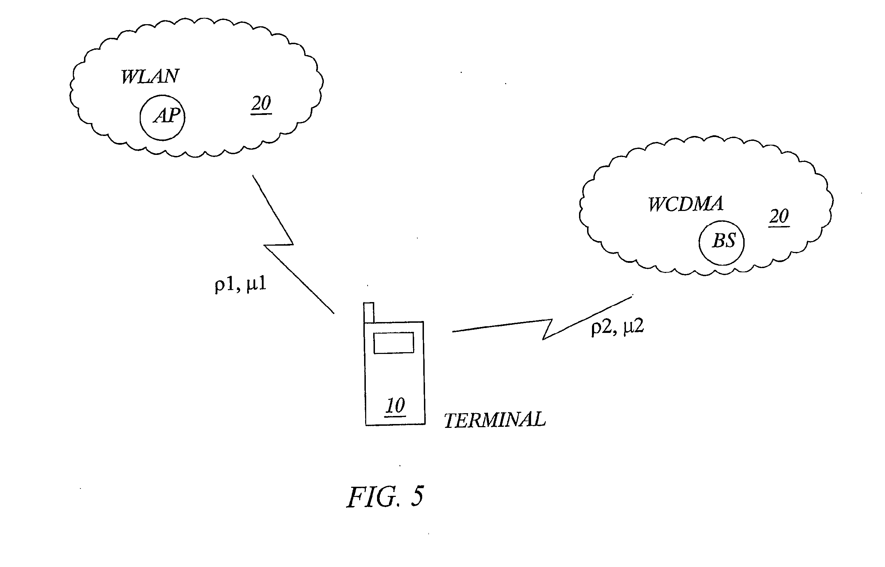

An example of an embodiment of the present invention will be described below, with reference to Fig. 5.

Consider a terminal 10 according to the invention, such as a mobile unit, that encounter the situation where it has to select one of a WLAN-network 20 and a WCDMA HS-network 20. Initially, the terminal 10 measures the radio signal strength or radio signal quality for WLAN and WCDMA, respectively. Consequently, it is possible to estimate $\mu$ for the two systems 20.

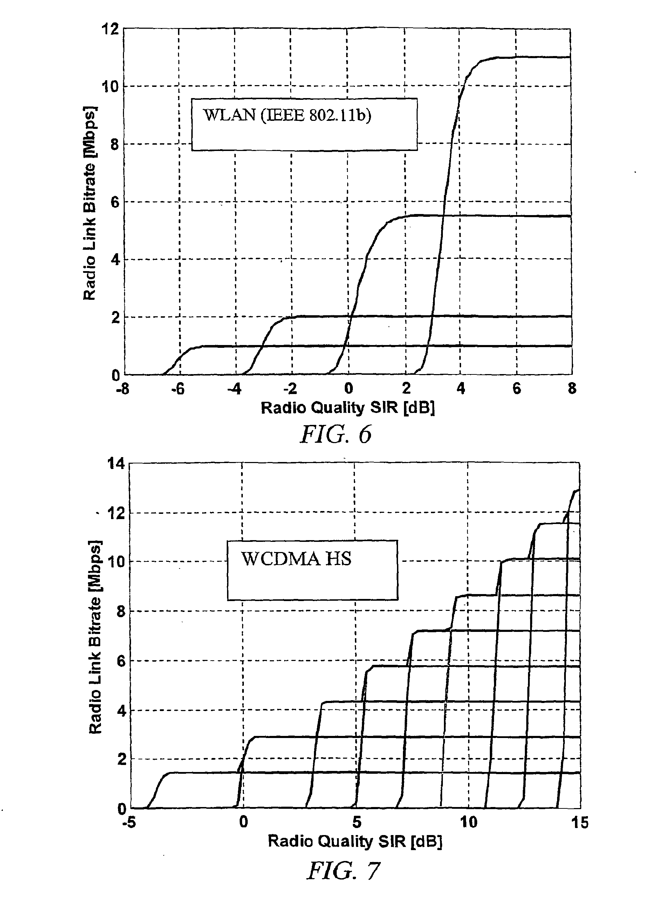

According to the example, the radio signal quality measurement results in $q_1$=1dB for WLAN and $q_2$=3dB for WCDMA. Using the g-functions provided in Fig. 6 and Fig. 7, these in turn lead to $\mu_1$=5Mbps for WLAN and $\mu_2$=3Mbps for WCDMA.

It is understood that Fig. 6 and Fig. 7 only serve as examples and are not to be viewed as the only manner in which to determine $\mu$.

Secondly, the terminal 10 measures the utilization factors $\rho_1$, and $\rho_2$ representing the usage for the WLAN-network 20, and the usage according to Equation 2 for the WCDMA HS-network 20. Suppose that $\rho_1$=0.7 and that $\rho_2$=0.3.

In a subsequent step, the terminal estimates CSE for the two systems 20 according to Equation 4 (or Equation 5), e.g. E[CSE]=$\mu(1-\rho)$. Accordingly, E[CSE]$_{WLAN}$=5*(1-0.7)=1.5 Mbps and E[CSE]$_{WCDMAHS}$=3*(1-0.3)=2.1Mbps.

Based on the estimated CSE for the two systems 20, the terminal 10 selects to connect to or utilize access WCDMA HS.

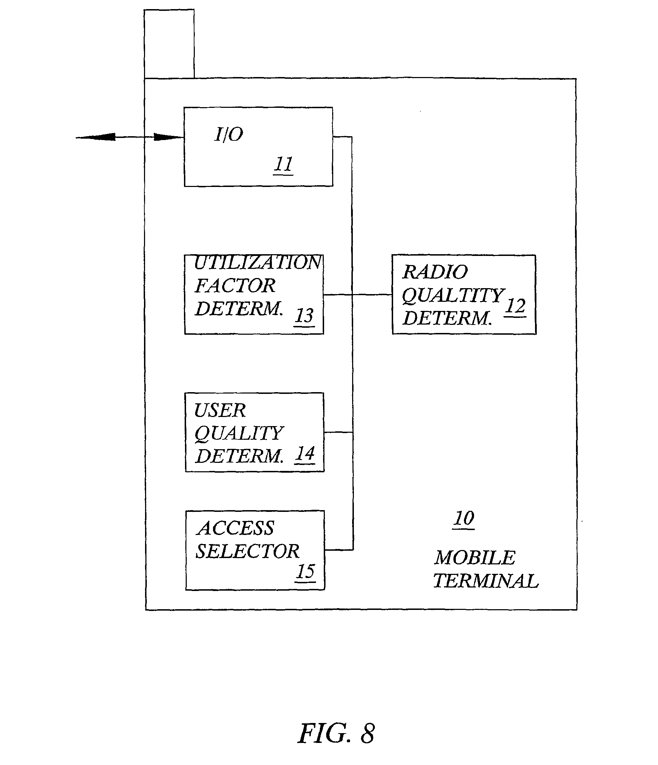

Figure 8 shows an embodiment of a mobile communication terminal 10 according to the invention. The terminal 10 comprises an input/output unit 11, a unit 12 for determining the radio quality for a plurality of accesses, a unit 13 for determining the load or utilization factor of at least one access point for each of the plurality of accesses, a unit 14 for determining a user perceived data quality based on the determined radio quality and utilization, and selecting unit 15 for selecting at least one access based on the determined user perceived data quality..

The radio quality determination unit 12 can be further configured to estimate the radio link bitrate as a function of the radio quality. Thereby, the user perceived data quality is determined based on the radio link bitrate and the utilization.

Optionally, the load or utilization determining unit 13 can be adapted to receive a signaled load from an access point or other component of the multi-access system, or the load unit 13 can be adapted to perform measurements and determine load on its own.

The estimated CSE-bitrate can ultimately be used for a number of purposes, not only access selection, including some non-multi-access related:

- In a multi-access selection, to select the access giving highest bitrate.
- In a multi-operator selection, to select the network giving highest bitrate.
- In an uncoordinated WLAN AP network, to select the AP giving highest bitrate.
- In a measurement tool (TEMS), to estimate data quality without accessing the network.
- In a handover selection situation.

It is understood that the invention is equally applicable to access selection for cases where the accesses i) belong to the same operator or different operators, ii) belong to the same or different radio access technologies, and iii) belong to the same or different access networks.

It will be understood by those skilled in the art that various modifications and changes may be made to the present invention without departure from the scope thereof, which is defined by the appended claims.

REFERENCES

[1] Patent: "Multi-Service Allocation Strategy for Multi-Access Systems", WO200308868

[2] P. Magnusson et al, "Radio Resource Management Distribution in a Beyond 3G Multi-Radio Access Architecture". Submitted to Globecom 2004.

[3] A. Furuskär: "Radio Resource Sharing and Bearer Service Allocation for Multi-Bearer Service", Dissertation, ISSN 1400-9137, Royal Institute of Technology, Sweden, May 2003.

[4] K. Hiltunen and R. De Bernardi, "WCDMA Downlink Capacity Estimation", VTC2000 Spring

[5] Patent: "Estimating load on channel within cell of mobile telecommunications system without requiring access to the network", WO200191415

[6] Standard document, UMTS30.03 version 3.2.0 Chapter B.1.6.5.1, 1998.

**Claims**

1.  A method of selecting an access network from among one or more access networks capable of providing service to a mobile communication station, **characterized by:**

    determining (S1) a radio quality from the terminal to each access network,
    determining (S2), for each access network, a utilization factor for at least one node,
    determining (S3), for each access network, a user perceived data quality, based on said determined utilization factor and said determined radio quality for the access network, and
    selecting (S4) at least one of said access networks, based on the determined user perceived quality.

2.  The method according to claim 1, **characterized by** the further steps of
    estimating a radio link bitrate $\mu$ for each access network, based on the determined radio quality q, and
    determining the user perceived data quality, based on the determined utilization factor and the estimated radio link bitrate.

3.  The method according to claim 2, **characterized by** estimating the radio link bitrate according to:

$$\mu=g(q)$$

    where $g$ is an access network specific function, $\mu$ is the radio link bitrate, and $q$ is the determined radio quality

4.  The method according to claim 3, **characterized in that** the radio link quality q is represented by at least any one of pilot signal strength, beacon signal strength, $E_b/N_0$, SIR, C/I, bit error rate, block error rate, and packet error rate.

5.  The method according to claim 2 or 3, **characterized by** determining (S3) the user perceived quality $Q_u$ according to:

$$Q_u = \mu*f(\rho)$$

    where $\mu$ represents the radio link bitrate, and $\rho$ represents the utilization factor for the access network, and $f$ is an access network specific function.

6.  The method according to claim 2 or 3, **characterized by** determining (S3) the user perceived quality $Q_u$ according to:

$$Q_u = \mu * (1-\rho)$$

where $\mu$ represents the radio link bitrate, and $\rho$ represents the utilization factor for the access network.

7. The method according to any of claims 2-6, **wherein** $\mu$ is constant.

8. The method according to any of claims 5-7, **wherein** $\rho$ is constant.

9. The method according to claim 5, **wherein** the function $f(\rho)$ is specific for each type of access network.

10. The method according to any of the above claims, **characterized by** representing said user perceived quality with a data bit rate for the access network.

11. The method according to any of claims 1 to 9, **characterized by** representing said user perceived quality with an active session data throughput for the access network.

12. The method according to claim 10, **wherein** said data bitrate comprises an estimated *Session Circuit Switched Equivalent* CSE bitrate.

13. The method according to claim 5 or 6, **wherein** $\rho$ is estimated by the expression:

$$\rho = 1 - \frac{P_{CCH}}{P_{TOT}},$$

where $P_{CCH}$ is a common channel power, and $P_{TOT}$ is the total power.

14. The method according to claim 13, **wherein** $P_{CHH}$ is estimated from the received pilot power and a factor $F_{CCH}$ that compensates for other common channels, and $P_{TOT}$ is estimated from the received wideband signal strength.

15. The method according to claim 14, **characterized by** determining (S2) the utilization by measuring at least a received pilot power $SS_{pilot}$ and a total power $SS_{out}$ from a received wideband signal strength, whereby the utilization as represented by $\rho$ is estimated.

16. The method according to claim 1, **characterized by** selecting (S4) the at least one access network before the terminal is connected to an access network.

17. The method according to claim 1, **wherein** said access networks utilize the same type of radio access technology.

18. The method according to claim 1, **wherein** said access networks utilize different types of radio access technologies.

19. The method according to claim 1, **wherein** said access networks belong to the same network.

20. The method according to claim 1, wherein said access networks belong to different networks.

21. The method according to claim 1, **wherein** said access networks belong to the same operator.

22. The method according to claim 1, **wherein** said access networks belong to different operators.

23. The method according to any of the above claims, **wherein** the one or more access networks include at least one of WCDMA, CDMA2000, GSM, WLAN or GPRS.

24. The method according to any of the previous claims, wherein said node comprises at least one of an access point, and base station.

**25.** A system enabling selection of an access network from among one or more access networks capable of providing service to a mobile communication station, **characterized by**:

means (12) for determining a radio quality from the terminal (10) to each access network (20),
means (13) for determining, for each access network (20), a utilization factor for at least one node,
means (14) for determining, for each access network (20), a user perceived data quality, based on said determined utilization factor and said determined radio quality for the access network, and
means (15) for selecting at least one of said access networks, based on the determined user perceived quality.

**26.** The system according to claim 25, **characterized in that** said determining means (12) further comprise means (12') configured to estimate a radio link bitrate $\mu$ for each access network, based on the determined radio quality $q$, and said determining means (14) are further configured to determine the user perceived data quality, based on the determined utilization factor and the estimated radio link bitrate.

**27.** The system according to claim 26, **characterized in that** said estimating means (12') are configured to estimate the radio link bitrate according to:

$$\mu = g(q)$$

where $g$ is an access network specific function, and $q$ is the determined radio quality.

**28.** The system according to claim 25, **characterized in that** said user perceived data quality determining means (14) are configured to determine the user perceived quality $Q_u$ according to:

$$Q_u = \mu * f(\rho)$$

where $\mu$ is the radio link bitrate, $\rho$ is the utilization factor, and $f$ is an access network specific function.

**29.** The system according to claim 25, **characterized in that** said user perceived data quality determining means (14) are configured to determine the user perceived quality $Q_u$ according to:

$$Q_u = \mu * (1-\rho)$$

where $\mu$ is the radio link bitrate, and $\rho$ is the utilization factor.

**30.** The system according to claim 28 or 29, **characterized in that** said utilization determining means (13) are configured to estimate $\rho$ according to:

$$\rho = 1 - \frac{P_{CCH}}{P_{TOT}},$$

where $P_{CCH}$ is a common channel power, and $P_{TOT}$ is the total power.

**31.** The system according to claim 30, **characterized in that** $P_{CHH}$ is estimated from the received pilot power and a factor $F_{CCH}$ that compensates for other common channels, and $P_{TOT}$ is estimated from the received wideband signal strength.

**32.** The system according to claim 31, **characterized in that** the utilization is determined by measuring at least a received pilot power $SS_{pilot}$ and a total power $SS_{out}$ from a received wideband signal strength, whereby the utilization as represented by $\rho$ is estimated.

33. The system according to any of claims 26-29, **characterized in that** said radio quality determining means (12) are further configured to estimate μ based on at least one of pilot signal strength, beacon signal strength, $E_b/N_0$, SIR, and C/I.

34. The system according to any of claims 25-33, **characterized in that** said node comprises at least one of an access point, and base station.

35. A mobile communication station (10) capable of receiving service from one or more access networks (20), **characterized by:**

  means (12) for determining a radio quality from the terminal (10) to each access network (20),
  means (13) for determining, for each access network (20), a utilization factor for at least one node,
  means (14) for determining for each access network (20), a user perceived data quality, based on a utilization factor and said determined radio quality for the access network (20), and
  means (15) for selecting at least one of said access networks, based on the determined user perceived quality.

## Patentansprüche

1. Verfahren zur Auswahl eines Zugangsnetzwerks aus einem oder mehreren Zugangsnetzwerken, die in der Lage sind, einer Mobilkommunikationsstation einen Dienst bereitzustellen, **gekennzeichnet durch**:

  Bestimmen (S1) einer Funkqualität von dem Endgerät zu jedem Zugangsnetzwerk,
  Bestimmen (S2), für jedes Zugangsnetzwerk, eines Nutzfaktors für zumindest einen Knoten,
  Bestimmen (S3), für jedes Zugangsnetzwerk, einer durch einen Nutzer wahrgenommenen Datenqualität auf Grundlage des bestimmten Nutzfaktors und der bestimmten Funkqualität für das Zugangsnetzwerk, und
  Auswählen (S4) zumindest eines Zugangsnetzwerks auf Grundlage der bestimmten **durch** den Nutzer wahrgenommenen Qualität.

2. Verfahren nach Anspruch 1, **gekennzeichnet durch** die weiteren Schritte:

  Schätzen einer Funkverbindungsbitrate μ für jedes Zugangsnetzwerk auf Grundlage der bestimmten Funkqualität $q$, und
  Bestimmen der **durch** den Nutzer wahrgenommenen Datenqualität auf Grundlage des bestimmten Nutzfaktors und der geschätzten Funkverbindungsbitrate.

3. Verfahren nach Anspruch 2, **gekennzeichnet durch** ein Schätzen der Funkverbindungsbitrate gemäß:

$$\mu = g(q)$$

wobei g eine bestimmte Funktion des Zugangsnetzwerks ist, μ die Funkverbindungsbitrate ist und q die bestimmte Funkqualität ist.

4. Verfahren nach Anspruch 3, **dadurch gekennzeichnet, dass** die Funkverbindungsqualität q durch zumindest einen beliebigen aus Pilotsignalstärke, Beacon-Signalstärke, $E_b/N_0$, SIR, C/I, Bitfehlerrate, Blockfehlerrate und Paketfehlerrate repräsentiert wird.

5. Verfahren nach Anspruch 2 oder 3, **gekennzeichnet durch** ein Bestimmen (S3) der **durch** den Nutzer wahrgenommenen Qualität $Q_u$ gemäß:

$$Q_u = \mu * f(\rho)$$

wobei $\mu$ die Funkverbindungsbitrate repräsentiert, und $\rho$ den Nutzfaktor für das Zugangsnetzwerk repräsentiert, und $f$ eine bestimmte Funktion des Zugangsnetzwerks ist.

**6.** Verfahren nach Anspruch 2 oder 3, **gekennzeichnet durch** ein Bestimmen (S3) der **durch** den Nutzer wahrgenommenen Qualität $Q_u$ gemäß:

$$Q_u = \mu * (1 - \rho)$$

wobei $\mu$ die Funkverbindungsbitrate repräsentiert, und $\rho$ den Nutzfaktor für das Zugangsnetzwerk repräsentiert.

**7.** Verfahren nach irgendeinem der Ansprüche 2 - 6, wobei $\mu$ eine Konstante ist.

**8.** Verfahren nach irgendeinem der Ansprüche 5 - 7, wobei $\rho$ eine Konstante ist.

**9.** Verfahren nach Anspruch 5, wobei die Funktion $f(\rho)$ speziell für jeden Zugangsnetzwerkstyp ist.

**10.** Verfahren nach irgendeinem der vorhergehenden Ansprüche, **gekennzeichnet durch** ein Repräsentieren der **durch** den Nutzer wahrgenommenen Qualität **durch** eine Datenbitrate für das Zugangsnetzwerk.

**11.** Verfahren nach irgendeinem der Ansprüche 1 bis 9, **gekennzeichnet durch** ein Repräsentieren der **durch** den Nutzer wahrgenommenen Qualität **durch** einen Aktivsitzungs-Datendurchsatz für das Zugangsnetzwerk.

**12.** Verfahren nach Anspruch 10, wobei die Datenbitrate eine geschätzte Session-Circuit-Switched-Equivalent- CSE bzw. Sitzungs-Leitungsvermittlungsäquivalenz-Bitrate umfasst.

**13.** Verfahren nach Anspruch 5 oder 6, wobei $\rho$ durch den Ausdruck geschätzt wird:

$$\rho = 1 - \frac{P_{CCH}}{P_{TOT}},$$

wobei $P_{CCH}$ eine Leistung eines gemeinsamen Kanals ist und $P_{TOT}$ die gesamte Leistung ist.

**14.** Verfahren nach Anspruch 13, wobei $P_{CCH}$ aus der empfangenen Pilotleistung und einem, für andere gemeinsame Kanäle kompensierenden Faktor $F_{CCH}$ geschätzt wird, und $P_{TOT}$ aus der empfangenen Breitbandsignalstärke geschätzt wird.

**15.** Verfahren nach Anspruch 14, **gekennzeichnet durch** ein Bestimmen (S2) der Nutzung **durch** ein Messen zumindest einer empfangenen Pilotleistung $SS_{pilot}$ und einer gesamten Leistung $SS_{out}$ aus einer empfangenen Breitbandsignalstärke, wobei die **durch** $\rho$ repräsentierte Nutzung geschätzt wird.

**16.** Verfahren nach Anspruch 1, **gekennzeichnet durch** ein Auswählen (S4) des zumindest einen Zugangsnetzwerks bevor das Endgerät mit einem Zugangsnetzwerk verbunden wird.

**17.** Verfahren nach Anspruch 1, wobei die Zugangsnetzwerke den gleichen Funkzugangstechnologietyp nutzen.

**18.** Verfahren nach Anspruch 1, wobei die Zugangsnetzwerke unterschiedliche Funkzugangstechnologietypen nutzen.

**19.** Verfahren nach Anspruch 1, wobei die Zugangsnetzwerke zu dem gleichen Netzwerk gehören.

**20.** Verfahren nach Anspruch 1, wobei die Zugangsnetzwerke zu unterschiedlichen Netzwerken gehören.

**21.** Verfahren nach Anspruch 1, wobei die Zugangsnetzwerke dem gleichen Betreiber gehören.

**22.** Verfahren nach Anspruch 1, wobei die Zugangsnetzwerke unterschiedlichen Betreibern gehören.

**23.** Verfahren nach irgendeinem der vorhergehenden Ansprüche, wobei das eine oder die mehreren Zugangsnetzwerke zumindest eines aus einem WCDMA, CDMA2000, GSM, WLAN oder GPRS enthalten.

**24.** Verfahren nach irgendeinem der vorhergehenden Ansprüche, wobei der Knoten zumindest einen aus einem Zugangspunkt und einer Basisstation umfasst.

**25.** System, die Auswahl eines Zugangsnetzwerks aus einem oder mehreren Zugangsnetzwerken ermöglichend, die in der Lage sind, einer Mobilkommunikationsstation einen Dienst bereitzustellen, **gekennzeichnet durch**:

> eine Einrichtung (12) zum Bestimmen einer Funkqualität von dem Endgerät (10) zu jedem Zugangsnetzwerk (20),
> eine Einrichtung (14) zum Bestimmen, für jedes Zugangsnetzwerk (20), eines Nutzfaktors für zumindest einen Knoten,
> eine Einrichtung (14) zum Bestimmen, für jedes Zugangsnetzwerk (20), einer **durch** den Nutzer wahrgenommenen Datenqualität auf Grundlage des bestimmten Nutzfaktors und der bestimmten Funkqualität für das Zugangsnetzwerk, und
> eine Einrichtung (15) zum Auswählen zumindest eines der Zugangsnetzwerke auf Grundlage der bestimmten, **durch** den Nutzer wahrgenommenen Nutzerqualität.

**26.** System nach Anspruch 25, **dadurch gekennzeichnet, dass** die Bestimmungseinrichtung (12) ferner eine Einrichtung (12') umfasst, die zum Schätzen einer Funkverbindungsbitrate $\mu$ für jedes Zugangsnetzwerk auf Grundlage der bestimmten Funkqualität q konfiguriert ist, und
die Bestimmungseinrichtung (14) ferner zum Bestimmen der durch den Nutzer wahrgenommenen Datenqualität auf Grundlage des bestimmten Nutzfaktors und der geschätzten Funkverbindungsbitrate konfiguriert ist.

**27.** System nach Anspruch 26, **dadurch gekennzeichnet, dass** die Schätzeinrichtung (12') konfiguriert ist zum Schätzen der Funkverbindungsbitrate gemäß:

$$\mu = g(q)$$

wobei *g* eine bestimmte Funktion des Zugangsnetzwerks ist und *q* die bestimmte Funkqualität ist.

**28.** System nach Anspruch 25, **dadurch gekennzeichnet, dass** das Bestimmungsmittel (14) der durch den Nutzer wahrgenommene Datenqualität konfiguriert ist zum Bestimmen der durch den Nutzer wahrgenommenen Qualität $Q_u$ gemäß:

$$Q_u = \mu * f(\rho)$$

wobei $\mu$ die Funkverbindungsbitrate ist, $\rho$ der Nutzfaktor ist, und f eine bestimmte Funktion des Zugangsnetzwerks ist.

**29.** System nach Anspruch 25, **dadurch gekennzeichnet, dass** das Bestimmungsmittel (14) der durch den Nutzer wahrgenommene Datenqualität konfiguriert ist zum Bestimmen der durch den Nutzer wahrgenommenen Qualität $Q_u$ gemäß:

$$Q_u = \mu * (1 - \rho)$$

wobei $\mu$ die Funkverbindungsbitrate ist, und $\rho$ der Nutzfaktor ist.

**30.** System nach Anspruch 28 oder 29, **dadurch gekennzeichnet, dass** die Nutzungsbestimmungseinrichtung (13) konfiguriert ist zum Bestimmen von ρ gemäß:

$$\rho = 1 - \frac{P_{CCH}}{P_{TOT}},$$

wobei $P_{CCH}$ eine Leistung eines gemeinsamen Kanals ist und $P_{TOT}$ die gesamte Leistung ist.

**31.** System nach Anspruch 30, **dadurch gekennzeichnet, dass** $P_{CCH}$ aus der empfangenen Pilotleistung und einem, für andere gemeinsame Kanäle kompensierenden Faktor $F_{CCH}$ geschätzt wird, und dass $P_{TOT}$ aus der empfangenen Breitbandsignalstärke geschätzt wird.

**32.** System nach Anspruch 31, **dadurch gekennzeichnet, dass** die Nutzung durch eine Messung zumindest einer Pilotleistung $SS_{pilot}$ und einer gesamten Leistung $SS_{out}$ aus einer empfangenen Breitbandsignalstärke bestimmt wird, wobei die durch ρ repräsentierte Nutzung geschätzt wird.

**33.** System nach irgendeinem der Ansprüche 26 - 29, **dadurch gekennzeichnet, dass** die Funkqualitätsbestimmungseinrichtung (12) ferner zum Schätzen von μ auf Grundlage zumindest einem aus Pilotsignalstärke, Beacon-Signalstärke, $E_b/N_o$, SIR und C/I konfiguriert ist.

**34.** System nach irgendeinem der Ansprüche 25 - 33, **dadurch gekennzeichnet, dass** der Knoten zumindest einen aus einem Zugangspunkt und einer Basisstation umfasst.

**35.** Mobilkommunikationsstation (10), die in der Lage ist, einen Dienst von einem oder mehreren Zugangsnetzwerken (20) zu empfangen, **gekennzeichnet durch**:

eine Einrichtung (12) zum Bestimmen einer Funkqualität von dem Endgerät (10) zu jedem Zugangsnetzwerk (20),

eine Einrichtung (13) zum Bestimmen, für jedes Zugangsnetzwerk (20), eines Nutzfaktors für zumindest einen Knoten,

eine Einrichtung (14) zum Bestimmen, für jedes Zugangsnetzwerk (20), einer **durch** den Nutzer wahrgenommenen Datenqualität auf Grundlage des bestimmten Nutzfaktors und der bestimmten Funkqualität für das Zugangsnetzwerk, und

eine Einrichtung (15) zum Auswählen zumindest eines der Zugangsnetzwerke auf Grundlage der bestimmten, **durch** den Nutzer wahrgenommenen Nutzerqualität.

**Revendications**

**1.** Procédé de sélection d'un réseau d'accès parmi un ou plusieurs réseaux d'accès capables de fournir un service à une station de communication mobile, **caractérisé par** :

la détermination (S1) d'une qualité radio du terminal vers chaque réseau d'accès,

la détermination (S2), pour chaque réseau d'accès, d'un facteur d'utilisation pour au moins un noeud,

la détermination (S3), pour chaque réseau d'accès, d'une qualité de données perçue par l'utilisateur, sur la base dudit facteur d'utilisation déterminé et de ladite qualité radio déterminée pour le réseau d'accès, et

la sélection (S4) d'au moins l'un desdits réseaux d'accès sur la base de la qualité déterminée perçue par l'utilisateur.

**2.** Procédé selon la revendication 1, **caractérisé par** les étapes supplémentaires :

d'estimation d'un débit binaire μ de la liaison radio pour chaque réseau d'accès sur la base de la qualité radio q déterminée, et

de détermination de la qualité de données perçue par l'utilisateur sur la base du facteur d'utilisation déterminé et du débit binaire estimé de la liaison radio.

**3.** Procédé selon la revendication 2, **caractérisé par** l'estimation du débit binaire de la liaison radio conformément à :

$$\mu = g(q)$$

où g est une fonction spécifique du réseau d'accès, $\mu$ est le débit binaire de la liaison radio, et q est la qualité radio déterminée.

**4.** Procédé selon la revendication 3, **caractérisé en ce que** la qualité q de la liaison radio est représentée par au moins l'un quelconque de l'intensité d'un signal pilote, de l'intensité d'un signal balise, du rapport $E_b/N_0$, du rapport SIR, du rapport C/I, du taux d'erreurs sur les bits, du taux d'erreurs sur les blocs et du taux d'erreurs sur les paquets.

**5.** Procédé selon la revendication 2 ou 3, **caractérisé par** la détermination (S3) de la qualité $Q_u$ perçue par l'utilisateur conformément à :

$$Q_u = \mu * f(\rho)$$

où $\mu$ représente le débit binaire de la liaison radio, et $\rho$ représente le facteur d'utilisation pour le réseau d'accès, et $f$ est une fonction spécifique du réseau d'accès.

**6.** Procédé selon la revendication 2 ou 3, **caractérisé par** la détermination (S3) de la qualité $Q_u$ perçue par l'utilisateur conformément à :

$$Q_u = \mu * (1 - \rho)$$

où $\mu$ représente le débit binaire de la liaison radio et $\rho$ représente le facteur d'utilisation du réseau d'accès.

**7.** Procédé selon l'une quelconque des revendications 2-6, dans lequel $\mu$ est constant.

**8.** Procédé selon l'une quelconque des revendications 5-7, dans lequel $\rho$ est constant.

**9.** Procédé selon la revendication 5, dans lequel la fonction $f(\rho)$ est spécifique de chaque type de réseau d'accès.

**10.** Procédé selon l'une quelconque des revendications ci-dessus, **caractérisé en ce qu'**on représente la qualité perçue par l'utilisateur par un débit binaire de données pour le réseau d'accès.

**11.** Procédé selon l'une quelconque des revendications 1 à 9, **caractérisé en ce qu'**on représente ladite qualité perçue par l'utilisateur par un débit de données de session active pour le réseau d'accès.

**12.** Procédé selon la revendication 10, dans lequel ledit débit binaire comprend un débit binaire estimé *Equivalent à une Session de Commutation de Circuit,* CSE (Circuit Switched Equivalent).

**13.** Procédé selon la revendication 5 ou 6, dans lequel $\rho$ est estimé par l'expression :

$$\rho = 1 - \frac{P_{CCH}}{P_{TOT}}$$

où $P_{CCH}$ est une puissance de canal commune, et $P_{TOT}$ est la puissance totale.

**14.** Procédé selon la revendication 13, dans lequel $P_{CHH}$ est estimé à partir de la puissance pilote reçue et d'un facteur $F_{CCH}$ qui compense les autres canaux communs, et $P_{TOT}$ est estimé à partir de l'intensité de signaux reçus à large bande.

**15.** Procédé selon la revendication 14, **caractérisé par** la détermination (S2) du taux d'utilisation en mesurant au moins une puissance pilote reçue $SS_{piote}$ et une puissance totale $SS_{out}$ à partir d'une intensité de signaux reçus à large bande, le taux d'utilisation représenté par $\rho$ étant ainsi estimé.

**16.** Procédé selon la revendication 1, **caractérisé par** la sélection (S4) de l'au moins un réseau d'accès avant que le terminal soit connecté à un réseau d'accès.

**17.** Procédé selon la revendication 1, dans lequel lesdits réseaux d'accès utilisent le même type de technologie d'accès radio.

**18.** Procédé selon la revendication 1, dans lequel lesdits réseaux d'accès utilisent des types de technologies d'accès radio différents.

**19.** Procédé selon la revendication 1, dans lequel lesdits réseaux d'accès appartiennent au même réseau.

**20.** Procédé selon la revendication 1, dans lequel lesdits réseaux d'accès appartiennent à des réseaux différents.

**21.** Procédé selon la revendication 1, dans lequel lesdits réseaux d'accès appartiennent au même opérateur.

**22.** Procédé selon la revendication 1, dans lequel lesdits réseaux d'accès appartiennent à des opérateurs différents.

**23.** Procédé selon l'une quelconque des revendications ci-dessus, dans lequel les un ou plusieurs réseaux d'accès comprennent au moins l'un des systèmes WCDMA, CDMA2000, GSM, WLAN ou GPRS.

**24.** Procédé selon l'une quelconque des revendications précédentes, dans lequel ledit noeud comprend au moins l'un d'un point d'accès et d'une station de base.

**25.** Système permettant de sélectionner un réseau d'accès parmi un ou plusieurs réseaux d'accès capables de fournir un service à une station de communication mobile, **caractérisé par** :

des moyens (12) pour déterminer une qualité radio du terminal (10) vers chaque réseau d'accès (20),
des moyens (13) pour déterminer, pour chaque réseau d'accès (20), un facteur d'utilisation pour au moins un noeud,
des moyens (14) pour déterminer, pour chaque réseau d'accès (20), une qualité de données perçue par l'utilisateur, sur la base dudit facteur d'utilisation déterminé et de ladite qualité radio déterminée pour le réseau d'accès, et
des moyens (15) pour sélectionner au moins l'un desdits réseaux d'accès sur la base de la qualité déterminée perçue par l'utilisateur.

**26.** Système selon la revendication 25, **caractérisé en ce que** lesdits moyens de détermination (12) comprennent en outre des moyens (12') configurés pour estimer un débit binaire $\mu$ de la liaison radio pour chaque réseau d'accès sur la base de la qualité radio déterminée q, et
lesdits moyens de détermination (14) sont en outre configurés pour déterminer la qualité de données perçue par l'utilisateur sur la base du facteur d'utilisation déterminé et du débit binaire estimé de la liaison radio.

**27.** Système selon la revendication 26, **caractérisé en ce que** lesdits moyens d'estimation (12') sont configurés pour estimer le débit binaire de la liaison radio conformément à :

$$\mu = g(q)$$

où g est une fonction spécifique du réseau d'accès et q est la qualité radio déterminée.

**28.** Système selon la revendication 25, **caractérisé en ce que** lesdits moyens de détermination (14) de la qualité perçue des données sont configurés pour déterminer la qualité $Q_u$ perçue par l'utilisateur conformément à :

**14**

$$Q_u = \mu * f(\rho)$$

où $\mu$ est le débit binaire de la liaison radio, $\rho$ est le facteur d'utilisation et $f$ est une fonction spécifique du réseau d'accès.

29. Système selon la revendication 25, **caractérisé en ce que** lesdits moyens de détermination (14) de la qualité des données perçue par l'utilisateur sont configurés pour déterminer la qualité $Q_u$ perçue par l'utilisateur conformément à :

$$Q_u = \mu * (1 - \rho)$$

où $\mu$ est le débit binaire de la liaison radio et $\rho$ est le facteur d'utilisation.

30. Système selon la revendication 28 ou 29, **caractérisé en ce que** lesdits moyens de détermination (13) du taux d'utilisation sont configurés pour estimer $\rho$ conformément à :

$$\rho = 1 - \frac{P_{CCH}}{P_{TOT}},$$

où $P_{CCH}$ est une puissance de canal commune et $P_{TOT}$ est la puissance totale.

31. Système selon la revendication 30, **caractérisé en ce que** $P_{CCH}$ est estimé à partir de la puissance pilote reçue et d'un facteur $F_{CCH}$ qui compense d'autres canaux communs, et $P_{TOT}$ est estimé à partir de l'intensité de signaux reçus à large bande.

32. Système selon la revendication 31, **caractérisé en ce que** le taux d'utilisation est déterminé en mesurant au moins une puissance pilote reçue $SS_{pilote}$ et une puissance totale $SS_{out}$ à partir d'une intensité de signaux reçus à large bande, le taux d'utilisation représenté par $\rho$ étant ainsi estimé.

33. Système selon l'une quelconque des revendications 26-29, **caractérisé en ce que** lesdits moyens de détermination (12) de la qualité radio sont en outre configurés pour estimer $\mu$ sur la base d'au moins l'un d'une intensité de signal pilote, d'une intensité de signal balise, d'un rapport $E_b/N_o$, d'un rapport SIR et d'un rapport C/I.

34. Système selon l'une quelconque des revendications 25-33, **caractérisé en ce que** ledit noeud comprend au moins l'un d'un point d'accès et d'une station de base.

35. Station de communication mobile (10) capable de recevoir un service d'un ou plusieurs réseaux d'accès (20), **caractérisé par** :

des moyens (12) pour déterminer une qualité radio du terminal (10) vers chaque réseau d'accès (20),
des moyens (13) pour déterminer, pour chaque réseau d'accès (20), un facteur d'utilisation pour au moins un noeud,
des moyens (14) pour déterminer, pour chaque réseau d'accès (20), une qualité de données perçue par l'utilisateur sur la base d'un facteur d'utilisation et de ladite qualité radio déterminée pour le réseau d'accès (20), et
des moyens (15) pour sélectionner au moins l'un desdits réseaux d'accès, sur la base de la qualité déterminée perçue par l'utilisateur.

FIG. 1

START

DETERMINE
RADIO
QUALITY — S1

DETERMINE
UTILIZATION
FACTOR — S2

DETERMINE
DATA
QUALITY — S3

SELECT
ACCESS — S4

STOP

FIG. 2

*FIG. 3*

*FIG. 4*

EP 1 698 137 B1

WLAN

$\left(AP\right)$  $\underline{20}$

WCDMA  $\underline{20}$

$\left(BS\right)$

$\rho 1, \mu 1$

$\rho 2, \mu 2$

$\underline{10}$  TERMINAL

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200308868 A
- WO 200191415 A